# EUROPEAN PATENT SPECIFICATION

(11) **EP 2 873 823 B1**
(45) Date of publication and mention of the grant of the patent: **29.03.2017**
(21) Application number: 14193252.5
(22) Date of filing: 14.11.2014
(51) Int. Cl.: F01N 3/10, F01N 3/035, F01N 3/20, F01N 9/00, F01N 3/025, F01N 13/00

(54) **Exhaust gas purification system for an internal combustion engine**
Abgasreinigungssystem für einen Verbrennungsmotor
Système de purification de gaz d'échappement pour moteur à combustion interne

(30) Priority: 14.11.2013 JP 2013235782
(43) Date of publication of application: 20.05.2015
(73) Proprietor: Toyota Jidosha Kabushiki Kaisha, Toyota-shi, Aichi-ken 471-8571 (JP)
(72) Inventor: Shirasawa, Takeru, Toyota-shi, Aichi-ken 471-8571 (JP)
(74) Representative: Intès, Didier Gérard André

(56) References cited:
- EP-A1- 2 439 384
- EP-A2- 2 292 904

## Description

### [TECHNICAL FIELD]

The present invention relates to an exhaust gas purification system for an internal combustion engine.

### [BACKGROUND ART]

There has been known an NOx selective reduction catalyst (hereinafter, also referred to simply as an "SCR catalyst") which purifies (removes or reduces) NOx contained in an exhaust gas from an internal combustion engine by using ammonia as a reducing agent. At the upstream side of this SCR catalyst, there is arranged a reducing agent supply valve which serves to supply ammonia or a precursor (e.g., urea) of ammonia into the exhaust gas.

Such two SCR catalysts may be arranged in series with each other in an exhaust passage of an internal combustion engine. In this case, only one reducing agent supply valve is arranged at the upstream side of an upstream side SCR catalyst (hereinafter, also referred to as a first SCR catalyst). Ammonia having flowed out from the first SCR catalyst is adsorbed to a downstream side SCR catalyst (hereinafter, also referred to as a second SCR catalyst), and hence, NOx can be reduced in the second SCR catalyst, too. Thus, in the case of provision of the two SCR catalysts which are arranged in series with each other, the NOx which was not reduced in the first SCR catalyst can be reduced in the second SCR catalyst. In addition, the first SCR catalyst and the second SCR catalyst are different in temperature, etc., so that even if one of the SCR catalysts is in a state where NOx can not be reduced, the other SCR catalyst may be in a state where NOx can be reduced. Accordingly, the rate of NOx reduction (hereinafter, also referred to as an NOx reduction rate) of a system as a whole can be improved by the provision of the two SCR catalysts in series with each other.

Here, when the temperature of an SCR catalyst becomes too high, there is a fear that ammonia may be oxidized in the SCR catalyst thereby to generate NOx. For example, in cases where the SCR catalyst is supported by a filter which serves to trap particulate matter (hereinafter, also referred to as PM) in the exhaust gas, the SCR catalyst becomes high in temperature at the time of filter regeneration processing. Hereinafter, the filter supporting the SCR catalyst is also referred to as an SCRF. The filter regeneration processing is to oxidize and remove the PM deposited on the SCRF. The filter regeneration processing is achieved by supplying fuel (HC) to a pre-stage catalyst having an oxidation function which is arranged in the exhaust passage at the upstream side of the SCRF. When the fuel is oxidized in the pre-stage catalyst, the exhaust gas flowing into the SCRF will be heated by the heat of oxidation. For that reason, the temperature of the SCRF can be raised to a filter regeneration temperature at which the oxidation of the PM is promoted.

In such a high temperature state, the amount of NOx to be generated by the oxidation of ammonia may become larger than the amount of NOx to be reduced by ammonia. For this reason, even if the amount of ammonia to be supplied is increased, the NOx reduction rate decreases. On the other hand, in cases where the two SCR catalysts are arranged in series with each other, even if the temperature of the first SCR catalyst is high, the temperature of the second SCR catalyst may be low. However, even if ammonia is going to be supplied to the second SCR catalyst in the course of filter regeneration processing, the ammonia to be supplied will be oxidized in the first SCR catalyst. For this reason, it will become difficult to supply ammonia to the second SCR catalyst, so that ammonia will become short or insufficient in the second SCR catalyst.

Here, there is also known a technology in which a first SCR catalyst and a second SCR catalyst are arranged in series with each other in an exhaust passage of an internal combustion engine, and in cases where the temperature of the first SCR catalyst is high, an amount of urea water to be supplied is decreased (for example, refer to a first patent literature). In this technology, ammonia is suppressed from passing through the first SCR catalyst and the second SCR catalyst.

However, even if the amount of urea water to be supplied is decreased, ammonia will be oxidized to generate NOx in cases where the temperature of the first SCR catalyst is too high, so there is a fear that the NOx reduction rate may be further decreased by the supply of the urea water. On the other hand, when the supply of the urea water is stopped, it will become difficult to improve the NOx reduction rate due to shortage of a reducing agent.

### [PRIOR ART REFERENCES]

### [PATENT LITERATURES]

[First Patent Literature] Japanese patent laid-open publication No. 2012-215154
[Second Patent Literature] Japanese patent laid-open publication No. 2009-270449
[Third Patent Literature] Japanese patent laid-open publication No. 2009-264181
[Fourth Patent Literature] Japanese patent laid-open publication No. 2006-342734
[Fifth Patent Literature] Japanese patent laid-open publication No. 2012-154238

### [SUMMARY OF THE INVENTION]

### [PROBLEMS TO BE SOLVED BY THE INVENTION]

The present invention has been made in view of the problems as mentioned above, and the object of the invention is that in cases where a plurality of SCR catalysts are provided in series with one another, a decrease in the NOx reduction rate of a system as a whole is suppressed when an upstream side SCR catalyst is at a high temperature.

### [MEANS FOR SOLVING THE PROBLEMS]

In order to achieve the above-mentioned object, the present invention resides in an exhaust gas purification system for an internal combustion engine which is provided with:
a first SCR catalyst that is arranged in an exhaust passage of the internal combustion engine and is an NOx selective reduction catalyst selectively to reduce NOx in an exhaust gas by using ammonia as a reducing agent;
a second SCR catalyst that is arranged in the exhaust passage at a location downstream of said first SCR catalyst and is an NOx selective reduction catalyst selectively to reduce NOx in the exhaust gas by using ammonia as a reducing agent;
a supply device that supplies ammonia or a precursor of ammonia to said first SCR catalyst; and
a control device that carries out temperature rise control in which the temperature of said first SCR catalyst is controlled to be equal to or more than a predetermined temperature;
wherein said control device starts said temperature rise control at the time when an amount of ammonia adsorbed by said second SCR catalyst is equal to or larger than a temperature rise start threshold value at which said temperature rise control is started.

The temperature of said first SCR catalyst goes up by carrying out the temperature rise control. However, the temperature rise control is not limited to the control of raising the temperature of said first SCR catalyst, for the purpose of said first SCR catalyst. For example, in cases where a filter is provided in the exhaust passage, the temperature of the exhaust gas may be caused to rise when particulate matter trapped in the filter is removed. In addition, when the temperature of the first SCR catalyst or the second SCR catalyst, or the temperature of a further catalyst which is provided in the exhaust passage is caused to rise, the temperature of the exhaust gas may be raised. The rise in temperature of such a catalyst is carried out in order to cause it to arrive at its activation temperature quickly, or in order to recover sulfur poisoning or HC poisoning of the catalyst. In this manner, the temperature rise control should just be such that the temperature of the first SCR catalyst goes up irrespective of its purpose.

The predetermined temperature can be set to a temperature at which ammonia is oxidized. Here, note that the predetermined temperature may be a temperature at which the particulate matter is oxidized. When the temperature of the first SCR catalyst becomes the temperature at which the particulate matter is oxidized, ammonia will be oxidized in the first SCR catalyst. Here, the exhaust gas flowing out from the first SCR catalyst dissipates heat out of the exhaust passage by the time it arrives at the second SCR catalyst, so the temperature of the exhaust gas becomes low. For this reason, the temperature of the second SCR catalyst becomes lower than the temperature of the first SCR catalyst. Accordingly, even in cases where the temperature of the first SCR catalyst becomes equal to or higher than the predetermined temperature, the temperature of the second SCR catalyst may become less than the predetermined temperature. However, even if ammonia or the precursor of ammonia is supplied when the temperature of the first SCR catalyst is equal to or higher than the predetermined temperature, the ammonia is oxidized in the first SCR catalyst, so it is difficult to cause the ammonia to be adsorbed to the second SCR catalyst. On the other hand, when ammonia has been caused to be adsorbed to the second SCR catalyst in advance before the temperature of the first SCR catalyst becomes equal to or more than the predetermined temperature, NOx can be reduced by the ammonia which has been adsorbed to the second SCR catalyst, even if the temperature of the first SCR catalyst thereafter becomes high.

Here, said control device starts the temperature rise control at the time when the amount of ammonia adsorbed by the second SCR catalyst is equal to or larger than the temperature rise start threshold value. As a result of this, even during the temperature rise control, NOx can be reduced in the second SCR catalyst. Here, note that the temperature rise control may be inhibited at the time when the amount of ammonia adsorbed by the second SCR catalyst is less than the temperature rise start threshold value. The temperature rise start threshold value is an amount of ammonia sufficient to reduce NOx in the second SCR catalyst in the course of carrying out the temperature rise control. Here, note that the temperature rise start threshold value may also be set to an amount of ammonia which is smaller than an amount of adsorption of ammonia at the time when the ammonia is saturated in the second SCR catalyst (hereinafter, referred to as a saturated amount of adsorption of ammonia), and which is an amount of ammonia with a margin with respect to the saturated amount of ammonia. Because the saturated amount of adsorption of ammonia changes according to the temperature of the second SCR catalyst, the temperature rise start threshold value may be set in such a manner that ammonia does not desorb from the second SCR catalyst, when the temperature rise control is being carried out.

Said control device can make the amount of ammonia or the amount of the precursor thereof to be supplied from said supply device to said first SCR catalyst larger at the time when there is a request for carrying out said temperature rise control and before said temperature rise control is carried out, than at the time when there is no request for carrying out said temperature rise control.

Said control device may make a determination as to whether there is a request for carrying out the temperature rise control. Here, note that the case where there is a request for carrying out the temperature rise control means that there is a need to carry out the temperature rise control, for example, a case where a predetermined condition for carrying out the temperature rise control is satisfied. For example, when the temperature rise control is not carried out, it can be said that in cases where the amount of particulate matter (PM) trapped by the filter exceeds an allowable value, or in cases where the exhaust gas purification ability of the system becomes lower than an allowable range, there is a request for carrying out the temperature rise control. Then, when there is a request for carrying out the temperature rise control, it is desirable to start the temperature rise control quickly. However, even if there is a request for carrying out the temperature rise control, said control device does not start the temperature rise control at times other than when the amount of ammonia adsorbed by the second SCR catalyst is equal to or larger than the temperature rise start threshold value. In contrast to this, if the amount of ammonia or the amount of the precursor thereof to be supplied to the first SCR catalyst is made relatively large at the time when there is a request for carrying out the temperature rise control, the amount of ammonia or the amount of the precursor thereof flowing out from the first SCR catalyst will increase. In that case, the amount of adsorption of ammonia in the second SCR catalyst can be made to increase quickly. For this reason, the amount of ammonia having been adsorbed by the second SCR catalyst will quickly reach the temperature rise start threshold value. Accordingly, after there has been a request for carrying out the temperature rise control, it becomes possible to quickly start the temperature rise control.

At the time when there is a request for carrying out said temperature rise control and before said temperature rise control is carried out, said control device can make the amount of ammonia or the amount of the precursor thereof to be supplied from said supply device to said first SCR catalyst larger in the case where the amount of ammonia adsorbed by said second SCR catalyst is less than said temperature rise start threshold value, than in the case where the amount of ammonia adsorbed by said second SCR catalyst is equal to or larger than said temperature rise start threshold value.

Here, note that in cases where the amount of ammonia adsorbed by the second SCR catalyst is equal to or larger than said temperature rise start threshold value, it is not necessary to supply ammonia or the precursor thereof. In cases where the amount of ammonia adsorbed by the second SCR catalyst is less than the temperature rise start threshold value, the amount of ammonia adsorbed to the second SCR catalyst can be caused to arrive at the temperature rise start threshold value quickly, by making relatively large the amount of ammonia or the precursor thereof to be supplied to the first SCR catalyst. As a result of this, the temperature rise control can be started quickly.

At the time when there is a request for carrying out said temperature rise control and before said temperature rise control is carried out, said control device can adjust the amount of ammonia or the amount of the precursor thereof to be supplied from said supply device to said first SCR catalyst in such a manner that the ammonia or the precursor thereof flows out from said first SCR catalyst.

Ammonia can not be supplied to the second SCR catalyst, unless ammonia flows out from the first SCR catalyst. Ammonia can be caused to flow out from the first SCR catalyst, for example, by supplying an amount of ammonia more than that which can be adsorbed by the first SCR catalyst. In addition, even after ammonia has been saturated in the first SCR catalyst, ammonia or the precursor thereof can be caused to flow out from the first SCR catalyst by supplying ammonia or the precursor thereof to the first SCR catalyst. As a result of this, ammonia can be caused to be adsorbed to the second SCR catalyst. Here, note that even if ammonia is not saturated in the first SCR catalyst, ammonia flows out from the first SCR catalyst depending on conditions.

At the time of carrying out said temperature rise control, said control device can stop the supply of ammonia or the precursor thereof from said supply device to said first SCR catalyst.

When the temperature rise control is carried out, the temperature of the first SCR catalyst becomes high, whereby ammonia therein is oxidized to generate NOx. By stopping the supply of ammonia or the precursor thereof to the first SCR catalyst at the time when the temperature rise control is carried out, it is possible to suppress NOx from being generated in the first SCR catalyst. As a result of this, the NOx reduction rate of the system as a whole can be improved.

Even at the time of carrying out said temperature rise control, said control device can resume the supply of ammonia or the precursor thereof from said supply device to said first SCR catalyst, in cases where the temperature of said first SCR catalyst is lower than said predetermined temperature, and in cases where the amount of ammonia adsorbed by said second SCR catalyst is less than said temperature rise start threshold value.

Even when the temperature rise control is carried out, the exhaust gas of low temperature flows through the exhaust passage, for example, at the time of deceleration, so the temperature of the first SCR catalyst may become less than the predetermined temperature. On the other hand, when the temperature rise control is carried out, ammonia is not supplied to the second SCR catalyst, so the amount of absorption of ammonia is decreased by an amount of ammonia consumed for reducing NOx. For this reason, there is a fear that ammonia becomes short or insufficient in the second SCR catalyst when the temperature rise control is carried out. On the other hand, when the temperature of the first SCR catalyst is low, the oxidation of ammonia in the first SCR catalyst is suppressed, so ammonia can be caused to be adsorbed to the first SCR catalyst and the second SCR catalyst. As a result of this, it is possible to suppress a decrease in the removal or reduction rate of NOx. Here, note that in this case, ammonia or the precursor thereof may be supplied to the first SCR catalyst in such a manner that ammonia does not flow out from the first SCR catalyst. If the temperature of the first SCR catalyst goes up again, ammonia will desorb from the first SCR catalyst, so that it will be supplied to the second SCR catalyst.

Even at the time of carrying out said temperature rise control, said control device can carry out temperature drop control in which the temperature of said first SCR catalyst is caused to drop lower than said predetermined temperature, in cases where the temperature of said first SCR catalyst is equal to or larger than said predetermined temperature, and in cases where the amount of ammonia adsorbed by said second SCR catalyst is equal to or less than an ammonia supply threshold value at which the adsorption of ammonia is caused to be resumed, and can resume the supply of ammonia or the precursor thereof from said supply device to said first SCR catalyst, after the temperature of said first SCR catalyst becomes lower than the predetermined temperature by means of the temperature drop control.

That is, even when the temperature rise control is carried out, said control device can make the temperature of the first SCR catalyst drop in order to cause ammonia to be desorbed to the second SCR catalyst. Here, note that the temperature drop control may only simply stop or inhibit the temperature rise control, or may cause the temperature of the exhaust gas to drop in a positive manner. By doing in this manner, it is possible to suppress ammonia from becoming short in the second SCR catalyst, thus making it possible to suppress the reduction rate of NOx from decreasing to a remarkable extent.

### [EFFECT OF THE INVENTION]

According to the present invention, in cases where a plurality of SCR catalysts are provided in series with one another, a decrease in the NOx reduction rate of a system as a whole can be suppressed when an upstream side SCR catalyst is at a high temperature.

### [BRIEF DESCRIPTION OF THE DRAWINGS]

Fig. 1 is a view showing the schematic construction of intake and exhaust systems of an internal combustion engine according to an embodiment of the present invention.
Fig. 2 is a view showing the relation between the temperature of an SCR catalyst and the rate of NOx reduction thereof.
Fig. 3 is a view showing the relation between the amount of adsorption of ammonia in the SCR catalyst and the rate of NOx reduction thereof.
Fig. 4 is a view showing the relation between the temperature, the saturated amount of adsorption of ammonia, and the rate of ammonia oxidation, of the SCR catalyst.
Fig. 5 is a flow chart showing a flow of filter regeneration processing according to a first embodiment of the present invention.
Fig. 6 is a flow chart showing a flow of filter regeneration processing according to a second embodiment of the present invention.
Fig. 7 is a flow chart showing a flow of filter regeneration processing according to a third embodiment of the present invention.
Fig. 8 is a flow chart showing a flow of control to increase the amount of adsorption of ammonia in a second SCR catalyst, which is carried out in step S302 shown in Fig. 7.
Fig. 9 is a time chart showing changes over time of various kinds of values at the time when the filter regeneration processing according to the third embodiment of the present invention is carried out.

### [MODES FOR CARRYING OUT THE INVENTION]

Hereinafter, modes for carrying out the present invention will be exemplarily described in detail based on embodiments with reference to the attached drawings. However, the dimensions, materials, shapes, relative arrangements and so on of component parts described in the embodiments are not intended to limit the scope of the present invention to these alone in particular as long as there are no specific statements.

### (First Embodiment)

Here, description will be made by taking as an example a case in which an exhaust gas purification system for an internal combustion engine according to the present invention is applied to a diesel engine for driving a vehicle. However, it is to be noted that the internal combustion engine related to the present invention is not limited to a diesel engine, but may be a gasoline engine, etc.

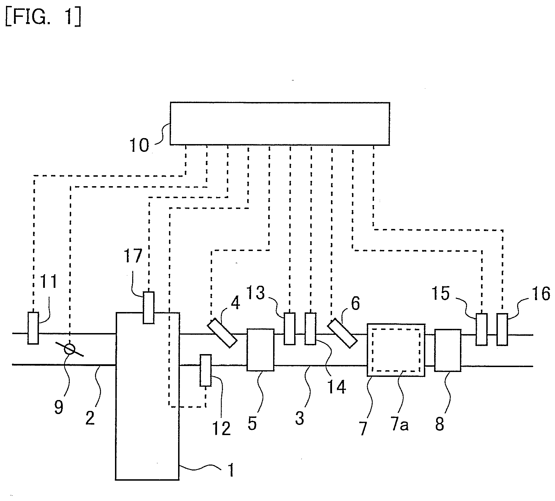

Fig. 1 is a view showing the schematic construction of intake and exhaust systems of an internal combustion engine according to an embodiment. The internal combustion engine 1 is a diesel engine for driving a vehicle. An intake passage 2 and an exhaust passage 3 are connected to the internal combustion engine 1. In the intake passage 2, there are arranged an air flow meter 11 and a throttle valve 9. The air flow meter 11 serves to detect an amount of intake air sucked into the internal combustion engine 1. The throttle valve 9 serves to adjust the amount of intake air sucked into the internal combustion engine 1.

In the exhaust passage 3, there are arranged a first exhaust gas temperature sensor 12, a fuel addition valve 4, a pre-stage catalyst 5, a first NOx sensor 13, a second exhaust gas temperature sensor 14, a reducing agent supply valve 6, an SCRF 7, a second SCR catalyst 8, a second NOx sensor 15, and a third exhaust gas temperature sensor 16, sequentially from an upstream side along the flow of an exhaust gas.

The pre-stage catalyst 5 is an oxidation catalyst. However, the pre-stage catalyst 5 may be a catalyst other than the oxidation catalyst, as long as it has an oxidation function. The pre-stage catalyst 5 may be a three-way catalyst, for example. In order to supply fuel to the pre-stage catalyst 5, the fuel addition valve 4 adds fuel (HC) into the exhaust gas.

The SCRF 7 is constructed such that a first SCR catalyst 7a is supported by a wall flow type filter which serves to trap particulate matter in the exhaust gas. The first SCR catalyst 7a and the second SCR catalyst 8 adsorb ammonia, and reduce the NOx in the exhaust gas by using the ammonia as a reducing agent.

In order to supply ammonia as the reducing agent to the first SCR catalyst 7a and the second SCR catalyst 8, the reducing agent supply valve 6 supplies ammonia into the exhaust gas. Here, note that a precursor of ammonia may be supplied, in place of ammonia. As the precursor of ammonia, there can be mentioned urea, for example. When urea is hydrolyzed by the heat of the exhaust gas, ammonia is generated. The ammonia or the precursor thereof may be supplied in any state of gas, liquid and solid. A part of the ammonia is adsorbed by the first SCR catalyst 7a. The remaining ammonia not having been adsorbed to the first SCR catalyst 7a, or ammonia having desorbed from the first SCR catalyst 7a, is adsorbed to the second SCR catalyst 8. Then, the NOx in the exhaust gas is reduced by means of the ammonia, which has been adsorbed by the first SCR catalyst 7a or the second SCR catalyst 8, and which acts as a reducing agent. Here, note that in this embodiment, the reducing agent supply valve 6 corresponds to a supply device in the present invention.

The first exhaust gas temperature sensor 12, the second exhaust gas temperature sensor 14, and the third exhaust gas temperature sensor 16 are each a sensor for detecting the temperature of exhaust gas. The first exhaust gas temperature sensor 12 detects the temperature of the exhaust gas which flows out from the internal combustion engine 1 or detects the temperature of the exhaust gas which flows into the pre-stage catalyst 5. The second exhaust gas temperature sensor 14 detects the temperature of the exhaust gas which flows out from the pre-stage catalyst 5 or detects the temperature of the exhaust gas which flows into the SCRF 7. The third exhaust gas temperature sensor 16 detects the temperature of the exhaust gas which flows out from the second SCR catalyst 8. The first NOx sensor 13 and the second NOx sensor 15 are each a sensor for detecting the concentration of NOx in the exhaust gas. The first NOx sensor 13 detects the concentration of NOx in the exhaust gas flowing into the SCRF 7. The second NOx sensor 15 detects the concentration of NOx in the exhaust gas flowing out from the second SCR catalyst 8. All of these sensors are not necessary required, but some of them can be provided as appropriate.

On each of the cylinders 2 of the internal combustion engine 1, there is mounted a fuel injection valve 17 for directly injecting fuel into a corresponding cylinder.

An electronic control unit (ECU) 10 is provided in combination with the internal combustion engine 1. The ECU 10 is electrically connected to a variety of kinds of sensors such as the air flow meter 11, the first exhaust gas temperature sensor 12, the first NOx sensor 13, the second exhaust gas temperature sensor 14, the second NOx sensor 15, the third exhaust gas temperature sensor 16, and so on. Then, output signals of these various kinds of sensors are inputted to the ECU 10. The ECU 10 estimates the flow rate of the exhaust gas in the exhaust passage 3 based on the output value of the air flow meter 11. Further, the ECU 10 estimates the temperature of the pre-stage catalyst 5 based on the output value of the first exhaust gas temperature sensor 12, the temperature of the SCRF 7 (i.e., the temperature of the first SCR catalyst 7a) based on the output value of the second exhaust gas temperature sensor 14, and the temperature of the second SCR catalyst 8 based on the output value of the third exhaust gas temperature sensor 16.

In addition, the throttle valve 9, the fuel addition valve 4, the reducing agent supply valve 6, and the fuel injection valves 17 are electrically connected to the ECU 10. Then, these parts are controlled by means of the ECU 10. Here, note that in this embodiment, the ECU 10 corresponds to a control device in the present invention.

Moreover, in this embodiment, unburnt fuel can also be discharged from the internal combustion engine 1. The ECU 10 can also supply fuel to the pre-stage catalyst 5 in the internal combustion engine 1 by carrying out post injection in which fuel is injected at the timing at which the fuel injected from each fuel injection valve 17 is discharged into the exhaust passage 3 in an unburnt state without being combusted.

Here, the particulate matter (PM) trapped by the SCRF 7 gradually deposits or accumulates therein. For this reason, in this embodiment, filter regeneration processing is carried out by means of the ECU 10 in order to remove the PM deposited in the SCRF 7. In the filter regeneration processing, temperature rise control is carried out in which the temperature of the exhaust gas is caused to go up in the pre-stage catalyst 5 by supplying fuel to the pre-stage catalyst 5. The supply of fuel to the pre-stage catalyst 5 is carried out by means of at least one of the addition of fuel from the fuel addition valve 4, and the post injection.

When fuel is oxidized in the pre-stage catalyst 5, heat of oxidation is generated. The exhaust gas flowing into the SCRF 7 is heated by this heat of oxidation. As a result of this, the temperature of SCRF 7 goes up. At the time of the execution of the filter regeneration processing, by controlling the amount of fuel to be supplied to the pre-stage catalyst 5, the temperature of the SCRF 7 is caused to rise to a predetermined filter regeneration temperature (e.g., 600 - 650 degrees C) at which the oxidation of the PM is promoted. As a result, the PM deposited in the PM filter 6 is oxidized and removed. Here, note that the temperature of the SCRF 7 can also be raised by causing hot gas to be discharged from the internal combustion engine 1.

In this embodiment, each time a predetermined period of time elapses after the execution of the last filter regeneration processing ends, the execution of the filter regeneration processing is requested. Here, note that each time the vehicle with the internal combustion engine 1 mounted thereon travels a predetermined travel distance, the execution of the filter regeneration processing may also be requested. In addition, each time the amount of PM deposition in the SCRF 7 reaches a predetermined amount of deposition, the execution of the filter regeneration processing may also be requested. The amount of PM deposition in the SCRF 7 can be estimated based on the histories of the amount of fuel injection in the internal combustion engine 1, the flow rate of the exhaust gas flowing into the SCRF 7, the temperature of the SCRF 7, and so on.

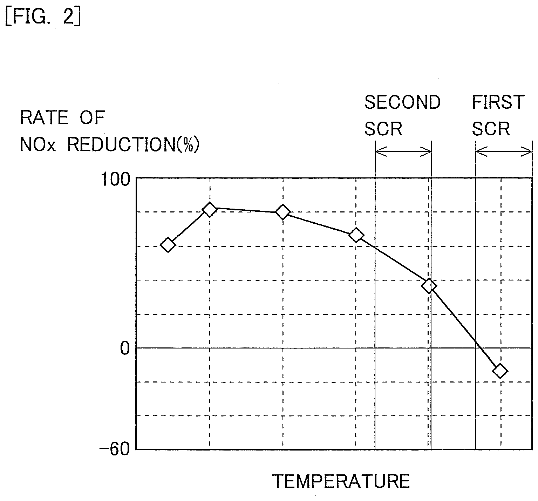

However, when the filter regeneration processing is carried out, the temperature of the first SCR catalyst 7a will become high. Here, Fig. 2 is a view showing the relation between the temperature of the SCR catalyst and the rate of NOx reduction therein. The NOx reduction rate of the SCR catalyst changes with the temperature thereof. Then, there exists a temperature at which the NOx reduction rate of the SCR catalyst becomes the highest, and the NOx reduction rate decreases therefrom, whether the temperature becomes higher or lower than this temperature. A range indicated by a "first SCR" in Fig. 2 is a temperature range of the first SCR catalyst 7a when the filter regeneration processing is carried out. A range indicated by a "second SCR" in Fig. 2 is a temperature range of the second SCR catalyst 8 when the filter regeneration processing is carried out. The first SCR catalyst 7a is closer to the pre-stage catalyst 5 than the second SCR catalyst 8, and hence, is higher in temperature than the second SCR catalyst 8. In addition, by the execution of the filter regeneration processing, the PM is oxidized to generate heat, so that the temperature of the first SCR catalyst 7a becomes higher than the temperature of the second SCR catalyst 8.

As shown in Fig. 2, when the filter regeneration processing is carried out, the temperature of the first SCR catalyst 7a is high, and so, the NOx reduction rate thereof becomes low. Here, the temperature of the first SCR catalyst 7a at the time when the filter regeneration processing is carried out goes up to a temperature at which ammonia is oxidized and changed into NOx. At such a temperature, an amount of NOx flowing out from the SCRF 7 can become more than an amount of NOx flowing into the SCRF 7. In this case, the NOx reduction rate of the SCRF 7 becomes a negative value. In addition, in the first SCR catalyst 7a, the ammonia having been adsorbed thereto desorbs therefrom due to high temperature, so that the reducing agent for reducing NOx runs short. For these reasons, the NOx reduction rate of the first SCR catalyst 7a at the time when filter regeneration processing is carried out becomes low.

On the other hand, the temperature of the second SCR catalyst 8 at the time when the filter regeneration processing is carried out becomes low, as compared with the temperature of the first SCR catalyst 7a. For this reason, the NOx reduction rate of the second SCR catalyst 8 at the time when the filter regeneration processing is carried out becomes relatively high.

However, NOx can not be reduced if ammonia has not been absorbed to the second SCR catalyst 8. For this reason, when the filter regeneration processing is carried out in a state where ammonia has not been absolved to the second SCR catalyst 8, it becomes difficult to reduce NOx in the first SCR catalyst 7a and the second SCR catalyst 8. Even if ammonia is supplied from the reducing agent supply valve 6 so that it is intended to be supplied to the second SCR catalyst 8, at the time of the filter regeneration processing, the ammonia thus supplied is oxidized in the first SCR catalyst 7a, or consumed for the reduction of NOx. As a result, the ammonia hardly reaches the second SCR catalyst 8.

Accordingly, in this embodiment, before the filter regeneration processing is carried out, an amount of ammonia equal to or larger than a threshold value A has been caused to be adsorbed to the second SCR catalyst 8 in advance. Here, note that the filter regeneration processing may be carried out, after waiting until the amount of ammonia equal to or larger than the threshold value A is adsorbed to the second SCR catalyst 8. The filter regeneration processing may be inhibited, until the amount of ammonia equal to or larger than the threshold value A is adsorbed to the second SCR catalyst 8. The threshold value A referred to herein is an amount of adsorption of ammonia which is required in order to reduce NOx in the second SCR catalyst 8 during the execution of the filter regeneration processing. Here, note that in this embodiment, the threshold value A corresponds to a temperature rise start threshold value in the present invention.

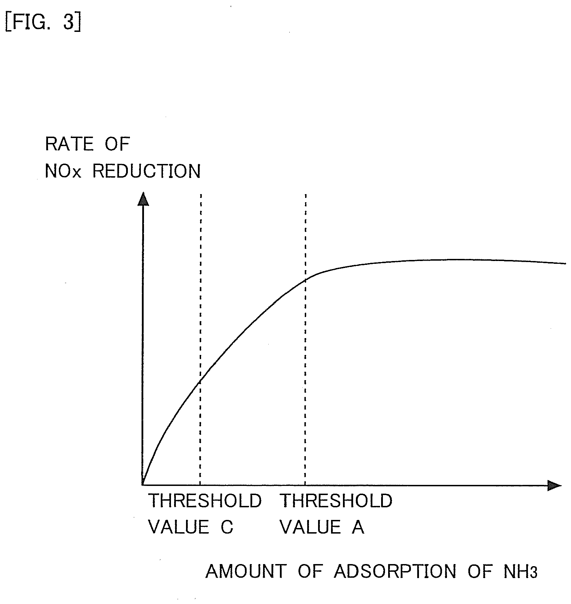

Fig. 3 is a view showing the relation between an amount of adsorption of ammonia in the SCR catalyst and the NOx reduction rate thereof. Until the amount of adsorption of ammonia increases to some extent, the larger the amount of adsorption of ammonia in the SCR catalyst, the higher becomes the NOx reduction rate thereof. On the other hand, when the amount of adsorption of ammonia in the SCR catalyst increases to some extent, the NOx reduction rate thereof does not substantially change even if the amount of adsorption of ammonia in the SCR catalyst further increases. Thus, the threshold value A is set to a value smaller than a range where the NOx reduction rate does not substantially change. Moreover, the threshold value A is set to an amount of adsorption of ammonia in the SCR catalyst at which the NOx reduction rate thereof also changes in accordance with a change in the amount of adsorption of ammonia, and with which the NOx reduction rate of the SCR catalyst becomes relatively high. A threshold value C will be described later.

Further, the threshold value A is set to a value which is smaller than the saturated amount of adsorption of ammonia in the second SCR catalyst 8, and which has a margin with respect to the saturated amount of adsorption of ammonia in the second SCR catalyst 8. For example, during the execution of the filter regeneration processing, ammonia desorbs from the first SCR catalyst 7a, and hence, it is preferable that ammonia can be adsorbed in the second SCR catalyst 8.

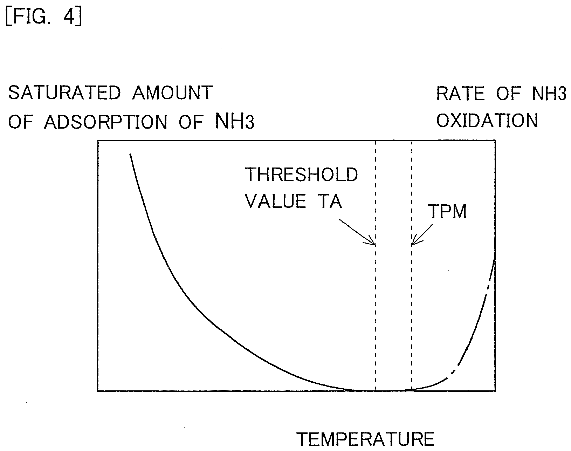

Fig. 4 is a view showing the relation between the temperature, the saturated amount of adsorption of ammonia (solid line), and the rate of ammonia oxidation (alternate long and short dash line), of the SCR catalyst. The rate of ammonia oxidation is a ratio of an amount of ammonia which is oxidized to change into NOx with respect to an amount of ammonia supplied. TPM in Fig. 4 is a temperature at which the oxidation of particulate matter (PM) begins. The higher the temperature of the SCR catalyst, the smaller becomes the saturated amount of adsorption of ammonia, and when the temperature of the SCR catalyst is equal to or higher than a threshold value TA, the saturated amount of adsorption of ammonia becomes zero. This threshold value TA is a maximum (the highest) temperature at which the SCR catalyst can adsorb ammonia. On the other hand, when the temperature of the SCR catalyst becomes equal to or larger than the threshold value TA, the higher the temperature thereof, the higher becomes the rate of ammonia oxidation. When the filter regeneration processing is carried out, the temperature of the first SCR catalyst 7a will become equal to or higher than TPM, but the temperature of the second SCR catalyst 8 becomes equal to or lower than the threshold value TA. Thus, by obtaining the relation shown in Fig. 4 through experiments, simulations or the like in advance, the saturated amount of adsorption of ammonia in the second SCR catalyst 8 can be obtained based on the temperature of the second SCR catalyst 8.

The amount of adsorption of ammonia in the second SCR catalyst 8 is estimated by the ECU 10. The amount of adsorption of ammonia in the second SCR catalyst 8 is obtained, for example, by subtracting an amount of ammonia consumed by the second SCR catalyst 8 from an amount of ammonia which flows into the second SCR catalyst 8. The amount of ammonia flowing into the second SCR catalyst 8 is equal to an amount of ammonia which flows out from the first SCR catalyst 7a. The amount of ammonia flowing out from the first SCR catalyst 7a is in the correlation with an engine operating condition and the rate of NOx reduction in the first SCR catalyst 7a, and hence, such a correlation has been obtained by experiments or simulations in advance, and stored in the ECU 10.

Here, note that an ammonia sensor for detecting ammonia may be mounted on the exhaust passage 3 at a location between the first SCR catalyst 7a and the second SCR catalyst 8, and the amount of ammonia flowing out from the first SCR catalyst 7a may be calculated based on a detected value of the ammonia sensor. The amount of ammonia consumed by the second SCR catalyst 8 is in the correlation with the engine operating condition and the rate of NOx reduction in the second SCR catalyst 8, and hence, such a correlation has been obtained by experiments or simulations in advance, and stored in the ECU 10. Here, note that the rates of NOx reduction in the first SCR catalyst 7a and the second SCR catalyst 8 are in the correlation with the temperatures of the individual catalysts and an amount of intake air, so that they can be estimated based on the temperatures of the individual catalysts and the amount of intake air. In addition, the rates of NOx reduction in the individual catalysts can also be obtained based on an estimated value of the concentration of NOx discharged from the internal combustion engine 1, and the concentrations of NOx detected by and the first NOx sensor 13 and the second NOx sensor 15, respectively.

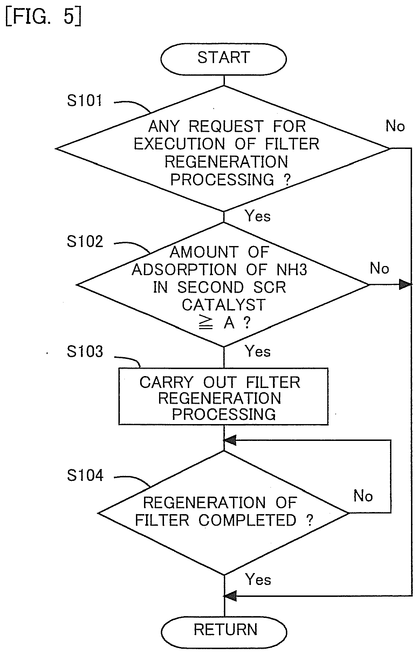

Fig. 5 is a flow chart showing a flow or routine of the filter regeneration processing according to this embodiment of the present invention. This routine is carried out by means of the ECU 10 in a repeated manner at each predetermined time interval.

In step S101, it is determined whether there is any request for the execution of the filter regeneration processing. In this step, it is determined whether the temperature rise control is carried out in which the temperature of the exhaust gas flowing into the SCRF 7 becomes a temperature at which ammonia is oxidized. For example, each time a predetermined period of time elapses after the execution of the last filter regeneration processing ends, the execution of the filter regeneration processing is requested. In addition, each time the vehicle with the internal combustion engine 1 mounted thereon travels a predetermined travel distance, the execution of the filter regeneration processing may also instead be requested. Moreover, each time the amount of PM deposition in the SCRF 7 reaches a predetermined amount of deposition, the execution of the filter regeneration processing may also be requested. In cases where an affirmative determination is made in step S101, the routine advances to step S102, whereas in cases where a negative determination is made, this routine is ended.

In step S102, it is determined whether the amount of adsorption of ammonia in the second SCR catalyst 8 is equal to or larger than the threshold value A. The threshold value A has been obtained through experiments, simulations or the like in advance. In cases where an affirmative determination is made in step S102, the routine advances to step S103, whereas in cases where a negative determination is made, this routine is ended.

In step S103, the filter regeneration processing is carried out. As a result of this, in the first SCR catalyst 7a, it becomes difficult to reduce NOx.

In step S104, it is determined whether the regeneration of the filter has been completed. In cases where the amount of the PM having been trapped by the SCRF 7 has decreased to a sufficient extent, the regeneration of the filter is completed. Here, note that when a predetermined period of time has elapsed from the time when the filter regeneration processing is started, a determination may be made that the regeneration of the filter has been completed. In cases where an affirmative determination is made in step S104, this routine is ended, whereas in cases where a negative determination is made, the processing of step S104 is carried out again. That is, the execution of the step S104 is carried out until the regeneration of the filter is completed.

In this manner, at the time when the filter regeneration processing is carried out, a sufficient amount of ammonia has been adsorbed to the second SCR catalyst 8, so that even during the execution of the filter regeneration processing, NOx can be reduced in the second SCR catalyst 8. As a result of this, it is possible to suppress a decrease in the NOx reduction rate of the system as a whole.

Here, note that in this embodiment, there has been described the case where the temperature of the first SCR catalyst 7a becomes high during the execution of the filter regeneration processing, but a similar consideration can be made in a case where the temperature of the first SCR catalyst 7a becomes high for other reasons. For example, for the purpose of raising the temperature of a catalyst downstream of the pre-stage catalyst 5, fuel may be supplied to the pre-stage catalyst 5. That is, in order to activate a catalyst arranged at the downstream side of the pre-stage catalyst 5, or in order to eliminate the sulfur poisoning of an NOx storage reduction catalyst in the case where the NOx storage reduction catalyst is provided, fuel may be supplied to the pre-catalyst 5. That is, in these cases, too, the temperature rise control is carried out. In these cases, if the temperature of the first SCR catalyst 7a goes up to a temperature at which ammonia is oxidized, ammonia may have been caused to be adsorbed to the second SCR catalyst 8 before the execution of the temperature rise control.

### (Second Embodiment)

In this second embodiment, before the filter regeneration processing is carried out, the amount of ammonia to be supplied to the first SCR catalyst 7a is caused to increase in a positive manner. According to this, the amount of ammonia having been adsorbed to the second SCR catalyst 8 is caused to increase quickly. The other devices, parts and so on are the same as those in the first embodiment, so the explanation thereof is omitted.

Here, when ammonia is supplied from the reducing agent supply valve 6, the ammonia not having been adsorbed in the first SCR catalyst 7a, or ammonia having desorbed from the first SCR catalyst 7a, is adsorbed to the second SCR catalyst 8. If the first SCR catalyst 7a is in a state to be able to adsorb ammonia, the amount of ammonia flowing out from the first SCR catalyst 7a is small, so that the amount of ammonia to be adsorbed to the second SCR catalyst 8 also becomes small. For this reason, it may take time until the amount of ammonia having been adsorbed by the second SCR catalyst 8 becomes equal to or more than the threshold value A. In this second embodiment, when there is a request for carrying out the filter regeneration processing, the amount of ammonia to be supplied to the first SCR catalyst 7a is made to be larger, as compared with the time when there is no request for carrying out the filter regeneration processing. For example, the amount of ammonia flowing out from the first SCR catalyst 7a can be caused to increase, by making higher the concentration of ammonia in the exhaust gas. At this time, the concentration of ammonia in the exhaust gas may also be made high by increasing the amount of supply of ammonia by making a period of time to supply the ammonia long, or the concentration of ammonia in the exhaust gas may also be made high by increasing the amount of supply of ammonia by increasing the amount of supply of ammonia per unit time. As a result of this, the amount of ammonia flowing out from the first SCR catalyst 7a increases, so that the amount of ammonia to be adsorbed to the second SCR catalyst 8 also increases.

In this second embodiment, ammonia may be forced to flow out from the first SCR catalyst 7a in a positive manner, by supplying to the first SCR catalyst 7a an amount of ammonia more than that at which ammonia is saturated in the first SCR catalyst 7a.

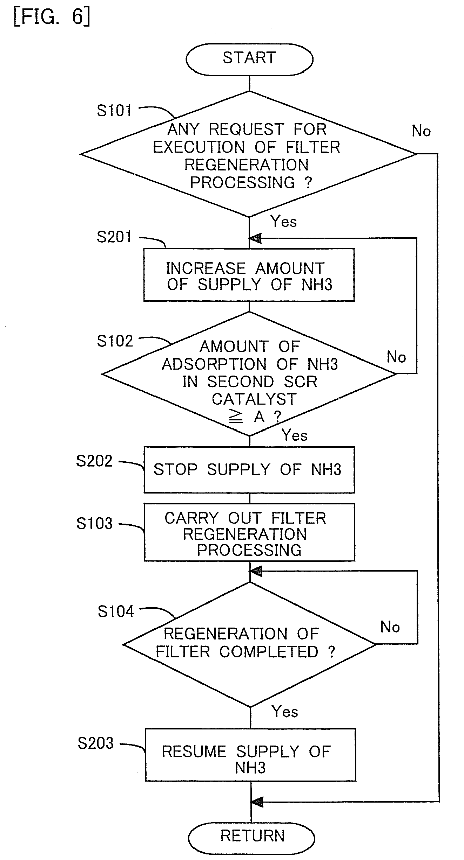

Fig. 6 is a flow chart showing a flow or routine of the filter regeneration processing according to this second embodiment of the present invention. This routine is carried out by means of the ECU 10 in a repeated manner at each predetermined time interval. Here, note that for those steps in which the same processing as in the above-mentioned flow is carried out, the same symbols are attached and an explanation thereof is omitted.

In this second embodiment, in cases where an affirmative determination is made in step S101, the routine advances to step S201. The amount of ammonia supplied from the reducing agent supply valve 6 is caused to increase in step S201. That is, the amount of supply of ammonia at the time when there is a request for the execution of the filter regeneration processing is made to be larger than the amount of supply of ammonia at the time when there is no request for the execution of the filter regeneration processing. The amount of supply of ammonia at the time when there is no request for the execution of the filter regeneration processing is decided according to an amount of NOx flowing into the first SCR catalyst 7a. The increase in the amount of supply of ammonia is continued until an affirmative determination is made in step S102. That is, in cases where a negative determination is made in step S102, the routine returns to step S201. Here, note that an optimal value of the amount of supply of ammonia after the increase may have been obtained in advance through experiments, simulations, or the like.

Then, in cases where an affirmative determination is made in step S102, the routine goes to step S202. In step S202, the supply of ammonia is stopped. At this time, a sufficient amount of ammonia has been adsorbed to the second SCR catalyst 8, even if the supply of ammonia is stopped, NOx can be reduced by the ammonia which has been adsorbed to the second SCR catalyst 8. Here, note that in step S202, instead of stopping the supply of ammonia, the amount of supply of ammonia may be decreased. That is, the amount of ammonia to be supplied to the first SCR catalyst 7a may also be made smaller than that in the case where the amount of ammonia having been adsorbed by the second SCR catalyst 8 is less than the threshold value A.

Further, in cases where an affirmative determination is made in step S104, i.e., in cases where it is determined that the regeneration of the filter was completed, the routine goes to step S203, where the supply of ammonia is resumed. In step S203, ammonia is supplied by setting the amount of supply thereof to that at the time when there is no request for the execution of the filter regeneration processing.

As described above, according to this second embodiment, when there is a request for the execution of the filter regeneration processing, the amount of ammonia flowing out from the first SCR catalyst 7a is caused to increase in a positive manner, so that ammonia can be caused to be adsorbed to the second SCR catalyst 8 quickly. Accordingly, it is possible to quickly start the filter regeneration processing.

### (Third Embodiment)

In this third embodiment, reference will be made to a case where the amount of ammonia having been adsorbed to the second SCR catalyst 8 becomes small during the execution of the filter regeneration processing. The other devices, parts and so on are the same as those in the first embodiment, so the explanation thereof is omitted.

Here, even if ammonia has been caused to be adsorbed to the second SCR catalyst 8 in advance, ammonia is not supplied during the execution of the filter regeneration processing, and hence, there is a fear that all the ammonia adsorbed to the second SCR catalyst 8 may be consumed. At this time, ammonia has not been adsorbed to the first SCR catalyst 7a, either, so the rate of NOx reduction of the system as a whole will decrease. Accordingly, in this third embodiment, even during the execution of the filter regeneration processing, in cases where the temperature of the first SCR catalyst 7a is a temperature at which ammonia can be adsorbed, or a temperature at which ammonia is not oxidized, ammonia is supplied from the reducing agent supply valve 6. At this time, ammonia is supplied until the amount of ammonia having been adsorbed to the first SCR catalyst 7a becomes equal to or more than a threshold value B. The threshold value B can be made to be an amount of ammonia which is required for reducing NOx in the second SCR catalyst 8. In addition, the threshold value B may also be made to be an amount of saturated ammonia in the first SCR catalyst 7a. If ammonia has been caused to be adsorbed to the first SCR catalyst 7a, the ammonia will desorb from the first SCR catalyst 7a in an early stage of the execution of the filter regeneration processing, so that the ammonia can be supplied to the second SCR catalyst 8.

Here, note that ammonia may be supplied in such a manner as to flow out from the first SCR catalyst 7a, similar to the above-mentioned second embodiment. As a result of this, in the course of the filter regeneration processing, it is possible to reduce NOx in the second SCR catalyst 8 by means of the ammonia which desorbs from the first SCR catalyst 7a and the ammonia which has been adsorbed to the second SCR catalyst 8.

Here, even when the filter regeneration processing is carried out, the exhaust gas of low temperature flows through the SCRF 7, for example during deceleration, so that the temperature of the first SCR catalyst 7a can drop to a temperature at which it is able to adsorb ammonia. At this time, ammonia is not oxidized into NOx. If ammonia has been caused to be adsorbed to the first SCR catalyst 7a at this time, the ammonia will desorb from the first SCR catalyst 7a at the next time when the temperature of the SCRF 7 goes up. Then, this ammonia is adsorbed to the second SCR catalyst 8. As a result, it becomes possible to reduce NOx in the second SCR catalyst 7a.

Here, note that in cases where the temperature of the SCRF 7 does not drop to the temperature at which it is able to adsorb ammonia, and in cases where the amount of ammonia having been adsorbed to the second SCR catalyst 8 is equal to or smaller than a threshold value C, temperature drop control, which is control to cause the temperature of the SCRF 7 to drop, may be carried out. The temperature drop control is achieved, for example, by stopping the supply of fuel to the pre-stage catalyst 5. The temperature drop control may also be control which stops the temperature rise control. That is, the temperature drop control is carried out by stopping or inhibiting the addition of fuel from the fuel addition valve 4, or post injection. Then, after the temperature of the SCRF 7 has dropped to a temperature at which it is able to adsorb ammonia, ammonia is supplied from the reducing agent supply valve 6.

In the second SCR catalyst 8, the threshold value C is a specific amount of adsorption of ammonia which when the amount of adsorption of ammonia becomes equal to or smaller than, the rate of NOx reduction decreases by a fixed value or more with respect to a target value. That is, the threshold value C is a specific amount of adsorption of ammonia to or below which when the amount of adsorption of ammonia decreases, the rate of NOx reduction decreases to a remarkable extent. Here, note that the threshold value C may also be an amount of adsorption of ammonia which is smaller by a fixed value or more with respect to an amount of adsorption of ammonia which is required for the second SCR catalyst 8 to reduce NOx. Also, note that in this third embodiment, the threshold value C corresponds to an ammonia supply threshold value in the present invention.

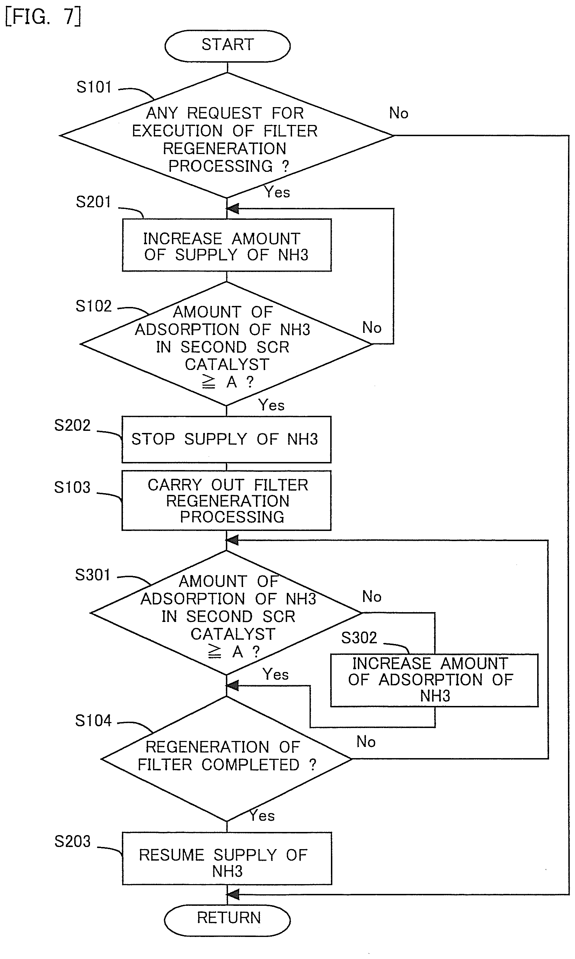

Fig. 7 is a flow chart showing a flow or routine of the filter regeneration processing according to this third embodiment of the present invention. This routine is carried out by means of the ECU 10 in a repeated manner at each predetermined time interval. Here, note that for those steps in which the same processing as in the above-mentioned flow is carried out, the same symbols are attached and an explanation thereof is omitted.

In this third embodiment, step S301 is processed after step S103. In step S301, it is determined whether the amount of adsorption of ammonia in the second SCR catalyst 8 is equal to or larger than a threshold value A. This threshold value A is the same as the threshold value A in step S102. However, the threshold value A in step S301 can also be set to a value different from the threshold value A in step S102. The amount of adsorption of ammonia in the second SCR catalyst 8 is estimated based on an amount of NOx reduction after the supply of ammonia is stopped in step S202. The amount of NOx reduction is estimated based on an amount of NOx flowing into the second SCR catalyst 8, the temperature of the second SCR catalyst 8, and an amount of intake air in the internal combustion engine 1. Here, the larger the amount of NOx flowing into the second SCR catalyst 8, the larger becomes the amount of consumption of ammonia in the second SCR catalyst 8. The amount of NOx reduction in the second SCR catalyst 8 is in relation with the temperature of the second SCR catalyst 8 and the amount of intake air in the internal combustion engine 1. Then, the amount of consumption of ammonia in the second SCR catalyst 8 can be calculated from the amount of NOx flowing into the second SCR catalyst 8 and the rate of NOx reduction in the second SCR catalyst 8. Here, note that in step S102, a determination is made that the amount of adsorption of ammonia in the second SCR catalyst 8 is equal to or larger than the threshold value A, and so, the amount of adsorption of ammonia before reducing NOx is calculated as the threshold value A. Such a relation may have been obtained in advance through experiments, simulations or the like, and made into a map.

In cases where an affirmative determination is made in step S301, the routine advances to step S104. Thereafter, in cases where a negative determination is made in step S104, the routine returns to step S301.

On the other hand, in cases where a negative determination is made in step S301, the routine advances to step S302. In step S302, the control to increase the amount of adsorption of ammonia in the second SCR catalyst 8 is carried out.

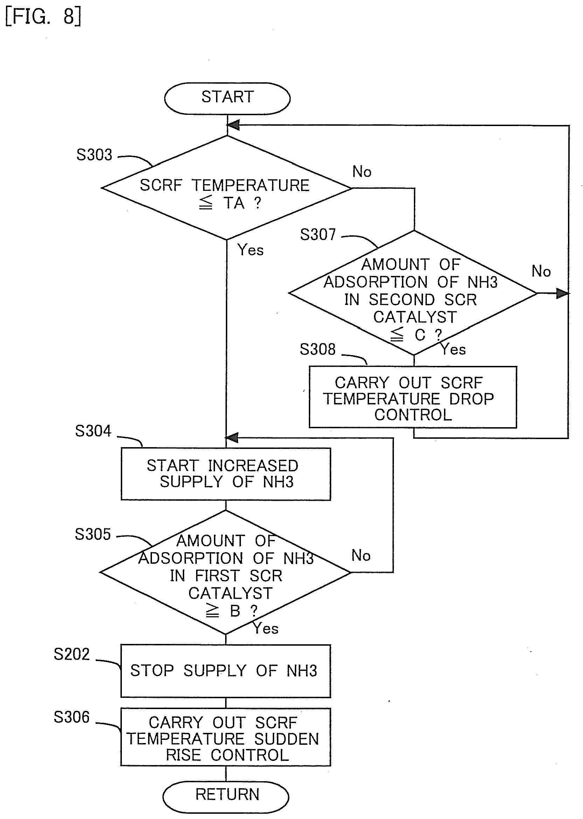

Here, Fig. 8 is a flow chart showing a flow or routine of the control to increase the amount of adsorption of ammonia in the second SCR catalyst 8, which is carried out in step S302 shown in Fig. 7. This routine is carried out by means of the ECU 10 in a repeated manner at each predetermined time interval. Here, note that for those steps in which the same processing as in the above-mentioned flow is carried out, the same symbols are attached and an explanation thereof is omitted.

In step S303, it is determined whether the temperature of the SCRF 7 is equal to or lower than a threshold value TA. This threshold value TA is an upper limit value of the temperature at which ammonia is able to be adsorbed in the first SCR catalyst 7a. This threshold value TA is the same as the threshold value TA in Fig. 4. In this step S303, it is determined whether the first SCR catalyst 7a is able to adsorb ammonia. In cases where an affirmative determination is made in step S303, the routine advances to step S304.

In step S304, an increase in the supply of ammonia is started. The amount of supply of ammonia in step S304 is made larger than that at times other than the execution of the filter regeneration processing. As a result of this, ammonia can be caused to be adsorbed to the first SCR catalyst 7a in a quick manner. However, the amount of supply of ammonia in step S304 may also be made to be the same as the amount of supply of ammonia at the times other than the execution of the filter regeneration processing.

In step S305, it is determined whether the amount of adsorption of ammonia in the first SCR catalyst 7a is equal to or larger than the threshold value B. This threshold value B may have been obtained in advance through experiments, simulations, or the like.

In cases where an affirmative determination is made in step S305, the routine advances to step S202, whereas in cases where a negative determination is made, the routine returns to step S304. That is, ammonia is continued to be supplied until the amount of adsorption of ammonia in the first SCR catalyst 7a becomes equal to or more than the threshold value B.

After the supply of ammonia is stopped in step S202, SCRF temperature sudden rise control, which is control for causing a sudden rise in the temperature of the SCRF 7, is carried out in step S306. In this step S306, exhaust gas or unburnt fuel of high temperature is caused to discharge from the internal combustion engine 1, or fuel is added from the fuel addition valve 4, so that the temperature of the SCRF 7 is caused to go up quickly to a temperature at which particulate matter can be oxidized.

In the process in which the temperature of the SCRF 7 is caused to go up in step S306, the temperature of the first SCR catalyst 7a becomes higher than a temperature at which the first SCR catalyst 7a is able to adsorb ammonia, so that ammonia desorbs from the first SCR catalyst 7a. With the thus desorbed ammonia being desorbed to the second SCR catalyst 8, NOx can be reduced in the second SCR catalyst 8 during the execution of the filter regeneration processing.

On the other hand, in cases where a negative determination is made in step S303, the routine advances to step S307. In step S307, it is determined whether the amount of adsorption of ammonia in the second SCR catalyst 8 is equal to or less than the threshold value C. This threshold value C may have been obtained in advance through experiments, simulations, or the like. In step S307, it is determined whether the rate of NOx reduction of the system as a whole will become low to a remarkable extent, if ammonia is not supplied to the second SCR catalyst 8. In cases where an affirmative determination is made in step S307, the routine advances to step S308, whereas in cases where a negative determination is made, the routine returns to step S303.

In step S308, the temperature drop control, which is the control for causing the temperature of the SCRF 7 to drop, is carried out. In this step S308, the temperature of the SCRF 7 is raised to a temperature at which it is able to adsorb ammonia. That is, in cases where the amount of adsorption of ammonia in the second SCR catalyst 8 is equal to or less than the threshold value C, ammonia is made possible to be adsorbed in the first SCR catalyst, by causing the temperature of the SCRF 7 to drop.

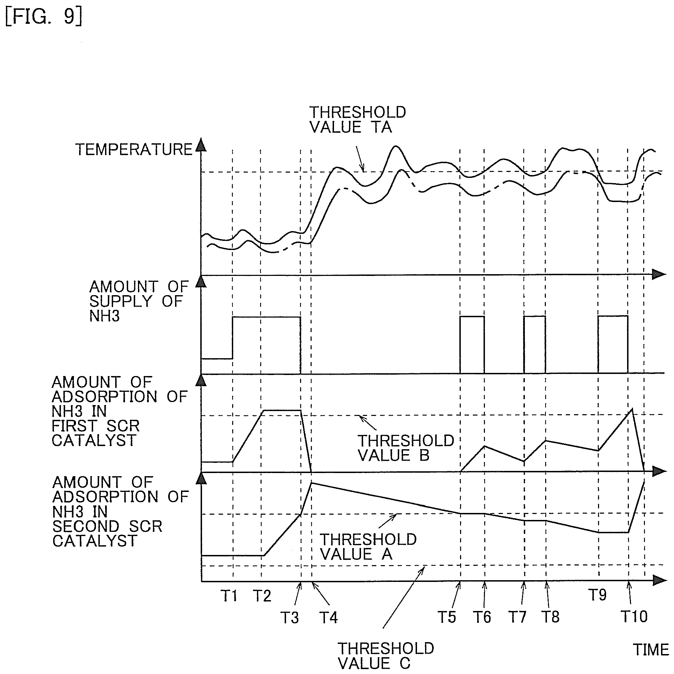

Fig. 9 is a time chart showing changes over time of various kinds of values at the time when the filter regeneration processing according to this third embodiment of the present invention is carried out. A solid line in the "temperature" indicates the temperature of the first SCR catalyst 7a (the SCRF 7), and an alternate long and short dash line indicates the temperature of the second SCR catalyst 8. The "amount of supply of ammonia" is in relation to the amount of ammonia to be supplied to the first SCR catalyst 7a. In Fig. 9, a point in time T1 is that at which a request for carrying out the filter regeneration processing starts. Before the point in time T1, the amount of supply of ammonia is decided according to the concentration of NOx in the exhaust gas.

In a period of time from T1 to T3, the filter regeneration processing is not carried out, and the amount of supply of ammonia is caused to increase more than before the request for the filter regeneration processing is made. As a result of this, in the period of time from T1 to T3, the amount of adsorption of ammonia in the first SCR catalyst 7a is increased due to the increase in the amount of supply of ammonia. Then, at a point in time T2, the amount of adsorption of ammonia in the first SCR catalyst 7a becomes equal to or larger than the threshold value B. Accordingly, in a period of time from T2 to T3, ammonia flows out from the first SCR catalyst 7a, so that the amount of adsorption of ammonia in the second SCR catalyst 8 increases. When the amount of adsorption of ammonia in the second SCR catalyst 8 becomes equal to or larger than the threshold value A, the filter regeneration processing is started. At the point in time T3, the amount of adsorption of ammonia in the second SCR catalyst 8 becomes the threshold value A, so the supply of ammonia is stopped, and at the same time, the filter regeneration processing is started.

At the point in time T3 and thereafter, the filter regeneration processing is carried out, so the temperature of the first SCR catalyst 7a and the temperature of the second SCR catalyst 8 become high. As a result of this, ammonia desorbs from the first SCR catalyst 7a, and the ammonia thus desorbed is adsorbed to the second SCR catalyst 8. Accordingly, in a period of time from T3 to T4, the amount of adsorption of ammonia in the first SCR catalyst 7a decreases, and at the same time, the amount of adsorption of ammonia in the second SCR catalyst 8 increases.

At the point in time T4, the amount of adsorption of ammonia in the first SCR catalyst 7a becomes zero. As a result of this, the ammonia flowing out from the first SCR catalyst 7a runs short or out, and so, the ammonia to be supplied to the second SCR catalyst 8 also becomes zero. Then, at and after the point in time T4, the ammonia having been adsorbed to the second SCR catalyst 8 is consumed by the reduction of NOx, so the amount of adsorption of ammonia in the second SCR catalyst 8 decreases.

At the point in time T5, the temperature of the first SCR catalyst 7a becomes lower than the threshold value TA, and at the same time, the amount of adsorption of ammonia in the second SCR catalyst 8 becomes less than the threshold value A. At this time, ammonia can be caused to be adsorbed to the first SCR catalyst 7a. For this reason, ammonia is supplied. The amount of adsorption of ammonia in the first SCR catalyst 7a is increased due to this supply of ammonia. At this time, ammonia is supplied in such a manner as not to flow out from the first SCR catalyst 7a, and hence, the amount of adsorption of ammonia in the second SCR catalyst 8 does not increase. However, because NOx is reduced in the first SCR catalyst 7a, the decrease in the amount of adsorption of ammonia in the second SCR catalyst 8 is suppressed.

Then, in a period of time from T6 to T7, the temperature of the first SCR catalyst 7a becomes equal to or higher than the threshold value TA, so the supply of ammonia is stopped. In this period of time, ammonia desorbs from the first SCR catalyst 7a, so that the amount of adsorption of ammonia in the first SCR catalyst 7a decreases. On the other hand, although the ammonia flowing out from the first SCR catalyst 7a is supplied to the second SCR catalyst 8, the amount of supply of ammonia is small, so the amount of adsorption of ammonia in the second SCR catalyst 8 decreases. In a period of time from T7 to T9, too, the processing also becomes the same as in the period of time from T5 to T7.

Further, at the point in time T9, ammonia is supplied because the temperature of the first SCR catalyst 7a becomes lower than the threshold value TA, and at the same time, the amount of adsorption of ammonia in the second SCR catalyst 8 becomes less than the threshold value A. Then, at a point in time of T10, the amount of adsorption of ammonia in the first SCR catalyst 7a arrives at the threshold value B, so the supply of ammonia is stopped. After that, ammonia desorbs from the first SCR catalyst 7a, and the amount of adsorption of ammonia in the first SCR catalyst 7a decreases, according to which the amount of adsorption of ammonia in the second SCR catalyst 8 increases.

As described above, according to this third embodiment, even when the filter regeneration processing is carried out, ammonia can be caused to be adsorbed to the second SCR catalyst 8, thus making it possible to suppress a decrease in the rate of NOx reduction.

### [EXPLANATION OF REFERENCE NUMERALS AND CHARACTERS]

- 1: internal combustion engine
- 2: intake passage
- 3: exhaust passage
- 4: fuel addition valve
- 5: pre-stage catalyst
- 6: reducing agent supply valve
- 7a: first SCR catalyst
- 8: second SCR catalyst
- 10: ECU
- 17: fuel injection valve

## Claims

1. An exhaust gas purification system for an internal combustion engine (1) **characterized by** comprising:
a first SCR catalyst (7a) that is arranged in an exhaust passage (3) of the internal combustion engine and is an NOx selective reduction catalyst to selectively reduce NOx in an exhaust gas by using ammonia as a reducing agent;
a second SCR catalyst (8) that is arranged in the exhaust passage (3) at a location downstream of said first SCR catalyst and is an NOx selective reduction catalyst to selectively reduce NOx in the exhaust gas by using ammonia as a reducing agent;
a supply device (6) that supplies ammonia or a precursor of ammonia to said first SCR catalyst; and
a control device (10) configured to carry out temperature rise control in which the temperature of said first SCR catalyst is controlled to be equal to or greater than a predetermined temperature;
wherein said control device (10) is configured to start said temperature rise control when an amount of ammonia adsorbed by said second SCR catalyst (8) is equal to or larger than a temperature rise start threshold value.

2. The exhaust gas purification system for an internal combustion engine as set forth in claim 1, **characterized in that**
said control device (10) is configured to cause an amount of ammonia or an amount of the precursor thereof to be supplied from said supply device (6) to said first SCR catalyst (7a) to be larger when there is a request for carrying out said temperature rise control and before said temperature rise control is carried out, than when there is no request for carrying out said temperature rise control.

3. The exhaust gas purification system for an internal combustion engine as set forth in claim 2, **characterized in that**
when there is a request for carrying out said temperature rise control and before said temperature rise control is carried out, said control device (10) is configured to cause the amount of ammonia or the amount of the precursor thereof to be supplied from said supply device (61) to said first SCR catalyst (7a) to be larger, in the case where the amount of ammonia adsorbed by said second SCR catalyst (8) is less than said temperature rise start threshold value, than in the case where the amount of ammonia adsorbed by said second SCR catalyst is equal to or larger than said temperature rise start threshold value.

4. The exhaust gas purification system for an internal combustion engine as set forth in any one of claims 1 through 3, **characterized in that**
when there is a request for carrying out said temperature rise control and before said temperature rise control is carried out, said control device (10) is configured to adjust the amount of ammonia or the amount of the precursor thereof to be supplied from said supply device (6) to said first SCR catalyst (7a) in such a manner that the ammonia or the precursor thereof flows out from said first SCR catalyst.

5. The exhaust gas purification system for an internal combustion engine as set forth in any one of claims 1 through 4, **characterized in that**
at the time of carrying out said temperature rise control, said control device (10) is configured to stop the supply of ammonia or the precursor thereof from said supply device (6) to said first SCR catalyst (7a).

6. The exhaust gas purification system for an internal combustion engine as set forth in claim 5, **characterized in that**
even at the time of carrying out said temperature rise control, said control device (10) is configured to resume the supply of ammonia or the precursor thereof from said supply device (6) to said first SCR catalyst (7a), in cases where the temperature of said first SCR catalyst is lower than said predetermined temperature, and in cases where the amount of ammonia adsorbed by said second SCR catalyst (8) is less than said temperature rise start threshold value.

7. The exhaust gas purification system for an internal combustion engine as set forth in claim 5, **characterized in that**
even at the time of carrying out said temperature rise control, said control device (10) is configured to carry out temperature drop control in which the temperature of said first SCR catalyst (7a) is caused to drop lower than said predetermined temperature, in cases where the temperature of said first SCR catalyst is equal to or larger than said predetermined temperature, and in cases where the amount of ammonia adsorbed by said second SCR catalyst (8) is equal to or less than an ammonia supply threshold value at which the adsorption of ammonia is caused to be resumed, and configured to resume the supply of ammonia or the precursor thereof from said supply device to said first SCR catalyst, after the temperature of said first SCR catalyst becomes lower than the predetermined temperature by means of the temperature drop control.

## Patentansprüche

1. Abgasreinigungssystem für einen Verbrennungsmotor (1), **dadurch gekennzeichnet, dass** es umfasst:
einen ersten SCR-Katalysator (7a), der in einem Auslasskanal (3) des Verbrennungsmotors angeordnet ist und ein NOx-Selektivreduktionskatalysator ist, um NOx in einem Abgas durch Verwendung von Ammoniak als Reduktionsmittel selektiv zu reduzieren,
einen zweiten SCR-Katalysator (8), der in dem Auslasskanal (3) an einer Position stromabwärts des ersten SCR-Katalysators angeordnet ist und ein NOx-Selektivreduktionskatalysator ist, um NOx in dem Abgas durch Verwendung von Ammoniak als Reduktionsmittel selektiv zu reduzieren,
eine Zufuhrvorrichtung (6), die dem ersten SCR-Katalysator Ammoniak oder einen Vorläufer von Ammoniak zuführt, und
eine Steuerungsvorrichtung (10), die dazu ausgebildet ist, Temperaturanstiegsregelung durchzuführen, bei der die Temperatur des ersten SCR-Katalysators derart geregelt wird, dass sie größer gleich einer vorgegebenen Temperatur ist,
wobei die Steuerungsvorrichtung (10) dazu ausgebildet ist, die Temperaturanstiegsregelung zu starten, wenn eine durch den zweiten SCR-Katalysator (8) adsorbierte Menge an Ammoniak größer gleich einem Temperaturanstiegsstartschwellenwert ist.

2. Abgasreinigungssystem für einen Verbrennungsmotor nach Anspruch 1, **dadurch gekennzeichnet, dass**
die Steuerungsvorrichtung (10) dazu ausgebildet ist, zu bewirken, dass eine Menge an Ammoniak oder eine Menge an dem Vorläufer davon, die von der Zufuhrvorrichtung (6) dem ersten SCR-Katalysator (7a) zuzuführen ist, größer ist, wenn eine Anforderung zum Durchführen der Temperaturanstiegsregelung vorliegt und ehe die Temperaturanstiegsregelung durchgeführt wird, als wenn keine Anforderung zum Durchführen der Temperaturanstiegsregelung vorliegt.

3. Abgasreinigungssystem für einen Verbrennungsmotor nach Anspruch 2, **dadurch gekennzeichnet, dass**,
wenn eine Anforderung zum Durchführen der Temperaturanstiegsregelung vorliegt und ehe die Temperaturanstiegsregelung durchgeführt wird, die Steuerungsvorrichtung (10) dazu ausgebildet ist, zu bewirken, dass die Menge an Ammoniak oder die Menge an dem Vorläufer davon, die von der Zufuhrvorrichtung (61) dem ersten SCR-Katalysator (7a) zuzuführen ist, in dem Fall, in dem die durch den zweiten SCR-Katalysator (8) adsorbierte Menge an Ammoniak kleiner als der Temperaturanstiegsstartschwellenwert ist, größer ist als in dem Fall, in dem die durch den zweiten SCR-Katalysator adsorbierte Menge an Ammoniak größer gleich dem Temperaturanstiegsstartschwellenwert ist.

4. Abgasreinigungssystem für einen Verbrennungsmotor nach einem beliebigen der Ansprüche 1 bis 3, **dadurch gekennzeichnet, dass**,
wenn eine Anforderung zum Durchführen der Temperaturanstiegsregelung vorliegt und ehe die Temperaturanstiegsregelung durchgeführt wird, die Steuerungsvorrichtung (10) dazu ausgebildet ist, die Menge an Ammoniak oder die Menge an dem Vorläufer davon, die von der Zufuhrvorrichtung (6) dem ersten SCR-Katalysator (7a) zuzuführen ist, auf eine Weise einzustellen, dass der Ammoniak oder der Vorläufer davon aus dem ersten SCR-Katalysator ausströmt.

5. Abgasreinigungssystem für einen Verbrennungsmotor nach einem beliebigen der Ansprüche 1 bis 4, **dadurch gekennzeichnet, dass**
zu der Zeit des Durchführens der Temperaturanstiegsregelung die Steuerungsvorrichtung (10) dazu ausgebildet ist, die Zufuhr von Ammoniak oder dem Vorläufer davon von der Zufuhrvorrichtung (6) zu dem ersten SCR-Katalysator (7a) zu stoppen.

6. Abgasreinigungssystem für einen Verbrennungsmotor nach Anspruch 5, **dadurch gekennzeichnet, dass**
selbst zu der Zeit der Durchführung der Temperaturanstiegsregelung die Steuerungsvorrichtung (10) dazu ausgebildet ist, die Zufuhr von Ammoniak oder dem Vorläufer davon von der Zufuhrvorrichtung (6) zu dem ersten SCR-Katalysator (7a) in Fällen, in denen die Temperatur des ersten SCR-Katalysators niedriger als die vorgegebene Temperatur ist, und in Fällen, in denen die Menge an durch den zweiten SCR-Katalysator (8) adsorbiertem Ammoniak kleiner als der Temperaturanstiegsstartschwellenwert ist, fortzusetzen.

7. Abgasreinigungssystem für einen Verbrennungsmotor nach Anspruch 5, **dadurch gekennzeichnet, dass**
selbst zu der Zeit der Durchführung der Temperaturanstiegsregelung die Steuerungsvorrichtung (10) dazu ausgebildet ist, Temperaturabfallregelung durchzuführen, bei der bewirkt wird, dass die Temperatur des ersten SCR-Katalysators (7a) unter die vorgegebene Temperatur fällt, in Fällen, in denen die Temperatur des ersten SCR-Katalysators größer gleich der vorgegebenen Temperatur ist, und in Fällen, in denen die Menge an durch den zweiten SCR-Katalysator (8) adsorbiertem Ammoniak kleiner gleich einem Ammoniakzufuhrschwellenwert ist, bei dem bewirkt wird, dass die Adsorption von Ammoniak fortgesetzt wird, und dazu ausgebildet ist, die Zufuhr von Ammoniak oder des Vorläufers davon von der Zufuhrvorrichtung zu dem ersten SCR-Katalysator fortzusetzen, nachdem durch die Temperaturabfallregelung die Temperatur des ersten SCR-Katalysators niedriger als die vorgegebene Temperatur wird.

## Revendications

1. Système de purification de gaz d'échappement pour un moteur à combustion interne (1) **caractérisé en ce qu'**il comporte :
un premier catalyseur de réduction catalytique sélective (7a) qui est disposé dans un passage d'échappement (3) du moteur à combustion interne et est un catalyseur de réduction sélective de NOx pour réduire de manière sélective le NOx dans un gaz d'échappement en utilisant de l'ammoniac comme agent réducteur ;
un deuxième catalyseur de réduction catalytique sélective (8) qui est disposé dans le passage d'échappement (3) dans un emplacement en aval dudit premier catalyseur de réduction catalytique sélective et est un catalyseur de réduction sélective de NOx pour réduire de manière sélective le NOx dans le gaz d'échappement en utilisant de l'ammoniac comme agent réducteur ;
un dispositif d'alimentation (6) qui délivre de l'ammoniac ou un précurseur d'ammoniac audit premier catalyseur de réduction catalytique sélective ; et
un dispositif de commande (10) configuré pour réaliser une commande d'élévation de température dans laquelle la température dudit premier catalyseur de réduction catalytique sélective est commandée pour être égale ou supérieure à une température prédéterminée ;
dans lequel ledit dispositif de commande (10) est configuré pour démarrer ladite commande d'élévation de température quand une quantité d'ammoniac adsorbée par ledit deuxième catalyseur de réduction catalytique sélective (8) est égale ou supérieure à une valeur de seuil de début d'élévation de température.

2. Système de purification de gaz d'échappement pour un moteur à combustion interne selon la revendication 1, **caractérisé en ce que**
ledit dispositif de commande (10) est configuré pour amener une quantité d'ammoniac ou une quantité du précurseur de celui-ci devant être délivrée à partir dudit dispositif d'alimentation (6) audit premier catalyseur de réduction catalytique sélective (7a) à être plus grande quand il y a une demande de réalisation de ladite commande d'élévation de température et avant que ladite commande d'élévation de température soit réalisée, que quand il n'y a pas de demande de réalisation de ladite commande d'élévation de température.

3. Système de purification de gaz d'échappement pour un moteur à combustion interne selon la revendication 2, **caractérisé en ce que**
quand il y a une demande de réalisation de ladite commande d'élévation de température et avant que ladite commande d'élévation de température soit réalisée, ledit dispositif de commande (10) est configuré pour amener la quantité d'ammoniac ou la quantité du précurseur de celui-ci devant être délivrée à partir dudit dispositif d'alimentation (61) audit premier catalyseur de réduction catalytique sélective (7a) à être plus grande, dans le cas où la quantité d'ammoniac adsorbée par ledit deuxième catalyseur de réduction catalytique sélective (8) est inférieure à ladite valeur de seuil de début d'élévation de température, que dans le cas où la quantité d'ammoniac adsorbée par ledit deuxième catalyseur de réduction catalytique sélective est égale ou supérieure à ladite valeur de seuil de début d'élévation de température.

4. Système de purification de gaz d'échappement pour un moteur à combustion interne selon l'une quelconque des revendications 1 à 3, **caractérisé en ce que**
quand il y a une demande de réalisation de ladite commande d'élévation de température et avant que ladite commande d'élévation de température soit réalisée, ledit dispositif de commande (10) est configuré pour ajuster la quantité d'ammoniac ou la quantité du précurseur de celui-ci devant être délivrée à partir dudit dispositif d'alimentation (6) audit premier catalyseur de réduction catalytique sélective (7a) d'une manière telle que l'ammoniac ou le précurseur de celui-ci s'écoule hors dudit premier catalyseur de réduction catalytique sélective.

5. Système de purification de gaz d'échappement pour un moteur à combustion interne selon l'une quelconque des revendications 1 à 4, **caractérisé en ce que**
au moment de la réalisation de ladite commande d'élévation de température, ledit dispositif de commande (10) est configuré pour arrêter l'alimentation en ammoniac ou en précurseur de celui-ci dudit dispositif d'alimentation (6) audit premier catalyseur de réduction catalytique sélective (7a).

6. Système de purification de gaz d'échappement pour un moteur à combustion interne selon la revendication 5, **caractérisé en ce que**
même au moment de la réalisation de ladite commande d'élévation de température, ledit dispositif de commande (10) est configuré pour reprendre l'alimentation en ammoniac ou en précurseur de celui-ci dudit dispositif d'alimentation (6) audit premier catalyseur de réduction catalytique sélective (7a), dans les cas où la température dudit premier catalyseur de réduction catalytique sélective est inférieure à ladite température prédéterminée, et dans les cas où la quantité d'ammoniac adsorbée par ledit deuxième catalyseur de réduction catalytique sélective (8) est inférieure à ladite valeur de seuil de début d'élévation de température.

7. Système de purification de gaz d'échappement pour un moteur à combustion interne selon la revendication 5, **caractérisé en ce que**
même au moment de la réalisation de ladite commande d'élévation de température, ledit dispositif de commande (10) est configuré pour réaliser une commande de baisse de température dans laquelle la température dudit premier catalyseur de réduction catalytique sélective (7a) est amenée à descendre en dessous de ladite température prédéterminée, dans les cas où la température dudit premier catalyseur de réduction catalytique sélective est égale ou supérieure à ladite température prédéterminée, et dans les cas où la quantité d'ammoniac adsorbée par ledit deuxième catalyseur de réduction catalytique sélective (8) est égale ou inférieure à une valeur de seuil d'alimentation en ammoniac à laquelle l'adsorption de l'ammoniac est amenée à être reprise, et configuré pour reprendre l'alimentation en ammoniac ou en précurseur de celui-ci dudit dispositif d'alimentation audit premier catalyseur de réduction catalytique sélective, une fois que la température dudit premier catalyseur de réduction catalytique sélective devient plus basse que la température prédéterminée au moyen de la commande de baisse de température.
